# EUROPÄISCHE PATENTSCHRIFT

(11) **EP 1 539 494 B1**
(45) Veröffentlichungstag und Bekanntmachung des Hinweises auf die Patenterteilung: **08.03.2006**
(21) Anmeldenummer: 03753278.5
(22) Anmeldetag: 09.09.2003
(51) Int. Cl.: B41F 13/004

(54) **ANTRIEBSVORRICHTUNGEN UND VERFAHREN ZUM ANTRIEB EINER BEARBEITUNGSMASCHINE**
DRIVE DEVICES AND METHOD FOR DRIVING A PROCESSING MACHINE
DISPOSITIFS D'ENTRAINEMENT ET PROCEDE D'ENTRAINEMENT D'UNE MACHINE DE TRAITEMENT

(30) Priorität: 19.09.2002 DE 10243454
(43) Veröffentlichungstag der Anmeldung: 15.06.2005
(60) Teilanmeldung: 05101819.0
(73) Patentinhaber: Koenig & Bauer Aktiengesellschaft, 97080 Würzburg (DE)
(72) Erfinder: RÜGAMER, Erich, Erhard, 97265 Hettstadt (DE)
(86) Internationale Anmeldenummer: PCT/DE2003/002972
(87) Internationale Veröffentlichungsnummer: WO 2004/028805

(56) Entgegenhaltungen:
- US-A- 5 481 971
- US-A- 5 947 023
- US-A1- 2002 124 743

## Beschreibung

Die Erfindung betrifft Antriebsvorrichtungen und ein Verfahren zum Antrieb einer Bearbeitungsmaschine, insbesondere zur Bearbeitung von Bahnen, gemäß dem Oberbegriff des Anspruchs 1 oder 4 bzw. 28.

Durch die DE 37 30 625 A1 ist eine Antriebsvorrichtung bekannt, wobei jeder Druckeinheit bzw. dem Falzapparat einer Druckmaschine eine Primärstation zugeordnet ist, welche Bediensollwerte von einer übergeordneten Steuerung empfängt und an die Sekundärstationen betreffender Baugruppen weiterleitet.

Die DE 42 14 394 C2 offenbart eine Antriebsvorrichtung für eine längswellenlose Druckmaschine, wobei der Falzapparat datentechnisch über einen Bus mit Druckstellengruppen verbunden ist. Der Falzapparat liefert seine Positionsreferenz an die Druckstellengruppen. Eine für die Antriebe einer einzelnen Druckstellengruppe gemeinsame Antriebssteuerung nimmt die Feinjustierung dieser Antriebe untereinander sowie in Relation zum Falzapparat vor.

Durch die EP 1 287 987 A1 ist eine Antriebsverbindung bekannt, wobei in einer Hauptsteuereinheit Sollwinkellagen und -geschwindigkeiten für die einzelnen Antriebe erzeugt, und über ein Netzwerk sämtlichen Antrieben in vorbestimmten Zeitintervallen übermittelt werden.

Aus der EP 1 151 865 A2 ist eine Antriebssteuerung bekannt, wobei sowohl aktuelle Leitachsimpulse als auch Phasenkorrekturen für die einzelnen Antriebe über ein gemeinsames Netzwerk den jeweiligen Antrieben übermittelt werden. In einer Ausführung wird dem Antrieb des Falzapparates kein Korrekturwert übermittelt, da dessen Position als Referenz dient.

Die WO 97/11848 zeigt eine Architektur eines Antriebssystems, wonach die Einzelantriebe der Druckmaschine über einen ersten Bus mit einer elektronischen Welle und zur Parametrierung zusätzlich mit einem Parametrierbus verbunden sind. Eine Antriebsarchitektur der EP 0 567 741 A1 mit einer Aufspaltung des Leitsystems in ein übergeordnetes Leitsystem und in autonome Druckstellengruppen, in welchen die Positionierung der Einzelantriebe zueinander und zum Falzapparat erfolgt, wobei eine Synchronisierung der Druckstellengruppen von einem Falzapparat her erfolgt, wird dort kritisiert.

Durch die 2002/0124743 ist ein Antriebssystem einer Druckmaschine offenbart, wobei durch eine zentrale Bedien- und Steuereinheit über ein Datennetz Antriebsdatenvorgaben an jeweils einzelnen Motoren zugeordneten Antriebssteuerungen mit Datenverarbeitungsmitteln ausgegeben werden.

Der Erfindung liegt die Aufgabe zugrunde, Antriebsvorrichtungen und ein Verfahren zum Antrieb einer Bearbeitungsmaschine zu schaffen.

Die Aufgabe wird erfindungsgemäß durch die Merkmale des Anspruchs 1 oder 4 bzw. 28 gelöst.

Die mit der Erfindung erzielbaren Vorteile bestehen insbesondere darin, dass mit der Positionsreferenz aus der elektronischen Leitachse sowohl für die Druckeinheiten als auch für den Falzapparat auftretende Fehler in Meß- und oder mechanischen Antriebssystemen besser handhabbar sind. Durch die Entkopplung und den Bezug auf eine gemeinsame Leitachse sind sowohl für die Antriebe der Druckeinheiten als auch für den Falzapparat Offsetwerte gegenüber der Leitachse einstellbar und in einer vorteilhaften Ausführung für eine bestimmte Produktion (Bahnführung) vorgebbar.

Von Vorteil ist eine Ausführung, wobei jedem rotatorischen Antrieb der Druckeinheiten (zumindest den Antrieben der unabhängig von anderen Formzylindern angetriebenen Formzylinder) und des Falzapparates ein Offsetwert gegenüber der Leitachse einstell-bzw. vorgebbar ist. Diese Offsetwerte sind z.B. im jeweiligen Antriebsregler des Antriebes oder vorzugsweise in einer untergeordneten Antriebssteuerung eingestellt bzw. dort als Offset gespeichert. Die Vorgabe eines bestimmten Offsetwertes kann z. B. in einem Leitstand eingegeben bzw. verändert werden und/oder für eine bestimmte Produktion dort gespeichert und entsprechend abgerufen und anschließend den Antriebsreglern bzw. untergeordneten Antriebssteuerungen übermittelt werden.

Von Vorteil ist die Ausführung, wobei nicht in einer übergeordneten Antriebssteuerung die Aufbereitung der Steuersignale für sämtliche relevante Antriebe erfolgt, sondern von dieser Antriebssteuerung lediglich eine übergeordnete Leitachsbewegung übermittelt wird.

Die spezifische Aufbereitung für den einzelnen Antrieb erfolgt im Antrieb selbst oder in einer untergeordneten Steuerung auf der Basis der Leitachsbewegung und zusätzlicher, spezifischer Informationen (z.B. Offset und/oder Abweichung aus der Sollwinkellage). Die für die Leitachse vorgesehene Signalleitung (Netzwerk) wird nicht durch eine hohe Anzahl von unterschiedlichen Jobs für jeden der einzelnen Antriebe unnötig belastet, die Wiederholfrequenz für die Positionsinformation und/oder die Sicherheit kann erhöht werden. In einer Variante wird die Erzeugung der übergeordnete Leitachsbewegung in einer von mehreren, quer verbundenen untergeordneten Antriebssteuerungen übernommen, welche dann als übergeordnete Antriebssteuerung (Master) angesehen werden kann. Die Querverbindung trägt auch in diesem Fall lediglich die Signale der übergeordnete Leitachsbewegung. Eine gesondert vorzusehende übergeordnete Antriebssteuerung kann in diesem Fall entfallen.

In einer vorteilhaften Ausführung sind für die Signalführung der umlaufenden elektronischen Leitachse und für die Übergabe von für die Antriebe spezifischen Größen - wie z.B. Offsetwerte zur Leitachsposition - voneinander verschiedene Netzwerke vorgesehen. Dies dient der Sicherheit bei der Übermittlung und der Schnelligkeit bei der Datenübertragung.

Von Vorteil ist eine Ausführung, wobei zwischen dem zu steuernden Antrieb und der die Leitachsposition erzeugenden Antriebssteuerung eine untergeordnete Antriebssteuerung vorgesehen ist, welche die übergreifende Leitachsposition abgreift und daraus abgeleitet die individuelle Steuerung (Winkellage, Winkelgeschwindigkeit) des zugeordneten Antriebes vornimmt. Vorteilhaften Weise sind im Fall einer mehrere Druckwerke aufweisenden Druckeinheit bzw. Druckturm mehrere Antriebe dieser untergeordneten Antriebssteuerung zugeordnet.

Ausführungsbeispiele der Erfindung sind in den Zeichnungen dargestellt und werden im folgenden näher beschrieben.

Es zeigen:
- Fig. 1: ein erstes Ausführungsbeispiel für die Antriebsvorrichtung;
- Fig. 2: ein zweites Ausführungsbeispiel für die Antriebsvorrichtung;
- Fig. 3: ein drittes Ausführungsbeispiel für die Antriebsvorrichtung;
- Fig. 4: eine schematische Darstellung eines Antriebes;
- Fig. 5: eine schematische Darstellung der relativen Lage während des Betriebs.

Eine Bearbeitungsmaschine für bahnförmige Materialien, z. B. eine Druckmaschine, insbesondere eine Rollenrotationsdruckmaschine, weist mehrere, mechanisch voneinander unabhängig jeweils durch einen Antriebsmotor M angetriebene Einheiten auf. Diese unabhängig voneinander angetriebene Einheiten können z. B. direkt oder indirekt mit einer die Druckmaschine durchlaufenden Bahn, z. B. Bedruckstoffbahn, zusammen wirken und müssen daher in ihrer relativen Lage zur Bahn bzw. zueinander ausgerichtet sein. Derartige Einheiten können Drucktürme 01, einzelne Druckeinheiten 02, einzelne Druckwerke 03 oder einzelne Zylinder 04, insbesondere einzelne Formzylinder 04, von Druckwerken 03 sein. Ebenso kann eine derartige Einheit z. B. eine die Bahn nach dem Bedrucken weiterverarbeitende Einheit 06, insbesondere ein Falzapparat 06, oder aber z. B. Perforiereinrichtungen, Stanzen, Sammeleinrichtungen, Schneideinrichtungen etc., darstellen. Des weiteren kann eine derartig unabhängig angetriebene Einheit auch ein oder mehrere Leitelemente 07, wie z. B. Zugwalzen, Skipslitter, Registerwalzen etc., sein.

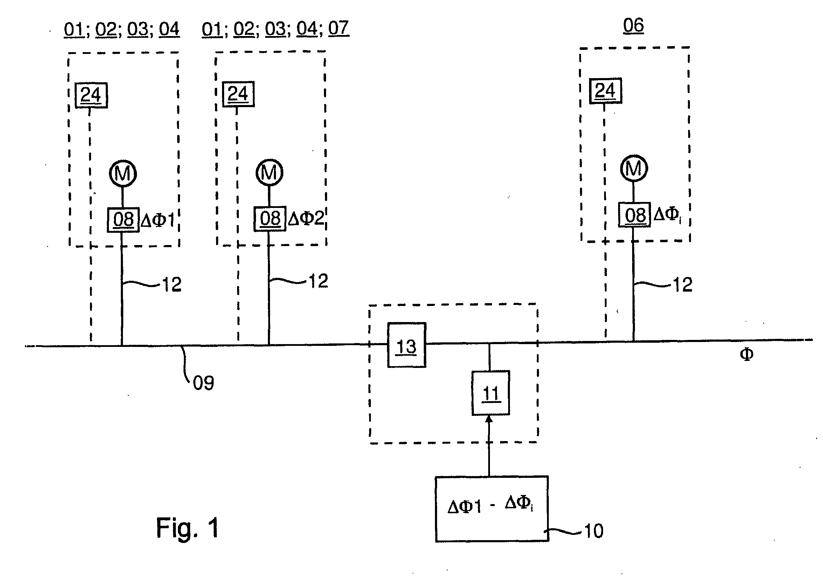

Fig. 1 zeigt drei derartig mechanisch voneinander unabhängig durch Antriebsmotoren M angetriebene Einheiten. Die beiden links dargestellten Einheiten können beispielsweise Drucktürme 01, Druckeinheiten 02, Druckwerke 03 oder Zylinder 04 sein. Die mittlere oder eine weitere, nicht dargestellte Einheit kann aber auch ein Leitelement 07 sein. Die rechte Einheit stellt z. B. eine weiterverarbeitende Einheit 06, insbesondere den Falzapparat 06 dar.

Den Antriebsmotoren M sind jeweils Antriebseinheiten 08 bzw. Regeleinheiten 08, im Folgenden vereinfacht Antriebe 08 mit Antriebsregelung genannt, zugeordnet, welche jeweils über mindestens eine Signalleitung 09 direkt oder indirekt miteinander und mit einer Rechen- und Datenverarbeitungseinheit 11, z. B. einen Rechner 11, verbunden sind. Die Rechen- und Datenverarbeitungseinheit 11 kann zusätzlich eine Bedieneinheit aufweisen oder mit einer Bedieneinheit 10, z. B. einem Leitstand 10, in Verbindung stehen. Die Antriebe 08 (bzw. Regler) können prinzipiell in Serie (nicht dargestellt) direkt in Ring- oder Busstruktur oder aber wie dargestellt in einer Baumstruktur durch Signalleitungen 12 mit der Signalleitung 09 verbunden sein.

Die mindestens eine Signalleitung 09 führt Signale einer Leitachsposition Φ, welche durch eine Recheneinheit 13, z. B. eine übergeordnete Antriebssteuerung 13, vorgegeben wird. Die Signalleitung 09 stellt zusammen mit der Recheneinheit 13 die sog. virtuelle Leitachse 09, 13 (elektronische Welle) für die mit ihr verbundenen Einheiten dar, an welcher sich die Einheiten in ihrer Lage bzw. Position orientieren. Diese Leitachsposition Φ wird an die Antriebe 08 als Vorgabe (Führungsgröße) weitergegeben.

Die Rechen- und Datenverarbeitungseinheit 11 liefert Vorgaben zur gewünschten Produktionsgeschwindigkeit an die übergeordnete Antriebssteuerung 13, und steht somit über die übergeordnete Antriebssteuerung 13, die Signalleitung 09 (Quer-Kommunikation) und die Signalleitungen 12 in Verbindung zu den Antrieben 08.

Jedem der Regler 08 ist ein spezifischer Offset ΔΦᵢ, z. B. Winkelversatz ΔΦᵢ, vorgebbar, welcher eine permanente aber veränderbare Verschiebung gegenüber der Leitachsposition Φ festlegt. Dieser Offset ΔΦᵢ ist z. B. direkt am Regler 08 und/oder über Rechen- und Datenverarbeitungseinheit 11 eingebbar und/oder für spezifische Betriebssituationen, insbesondere spezifische Bahnführungen in einem Speicher in der Rechen- und Datenverarbeitungseinheit 11 abgelegt und abrufbar. Ist die Signalleitung 09 entsprechend, beispielsweise als breitbandiger Bus oder breitbandiges Netzwerk, ausgeführt, so kann die Information über den jeweils vorgegebenen und festgelegten Offset ΔΦᵢ sowie die "rotierende" Leitachsposition Φ ggf. über die gemeinsame Signalleitung 09 erfolgen. Die Signalleitung 09 kann auch zusätzlich jeweils mit einem Steuersystem 24 verbunden sein, welches beispielsweise die von den Antriebsmotoren M verschiedenen Stellglieder und Antriebe der Druckeinheiten 02 bzw. Druckwerke 03 bzw. Falzapparate 06, z. B. Farbzuführung, Stellbewegungen von Walzen und/oder Zylindern, Feuchtwerk, Positionen etc. steuert und/oder regelt (Verbindung strichliert dargestellt).

Der jeweilige Offset ΔΦᵢ wird z. B. vor Produktionsbeginn vom Leitstand 10 oder von der Rechen- und Datenverarbeitungseinheit 11 an die Antriebe 08 überführt und dort gespeichert. In vorteilhafter Ausführung ist der Offset ΔΦᵢ während des Betriebes bzw. der Produktion am Antrieb 08 selbst, insbesondere aber über die Rechen- und Datenverarbeitungseinheit 11 veränderbar.

Die Offsetwerte ΔΦᵢ für die verschiedenen Antriebe 08 können in einer Variante auch in der übergeordneten Antriebssteuerung 13 gespeichert werden. In diesem Fall erhält jeder Antrieb 08 über die Signalleitungen 09; 12 (bzw. in Serie: nur 09) als Vorgabe die Summe aus der rotierenden Leitachsposition Φ und dem spezifischen, gespeicherten Offsetwert ΔΦᵢ des jeweiligen Antriebes 08.

So folgen alle Antriebe 08, beispielsweise die Antriebe 08 der beiden ersten z. B. als Drucktürme 01 ausgeführten Einheiten sowie der Antrieb 08 der als Falzapparat 06 ausgeführten Einheit jeweils der rotierenden Leitachsposition Φ aus der übergeordneten Antriebssteuerung 13 mit jeweils einem festgelegten Offsetwerte ΔΦᵢ relativ zur absoluten Lage der Leitachsposition Φ.

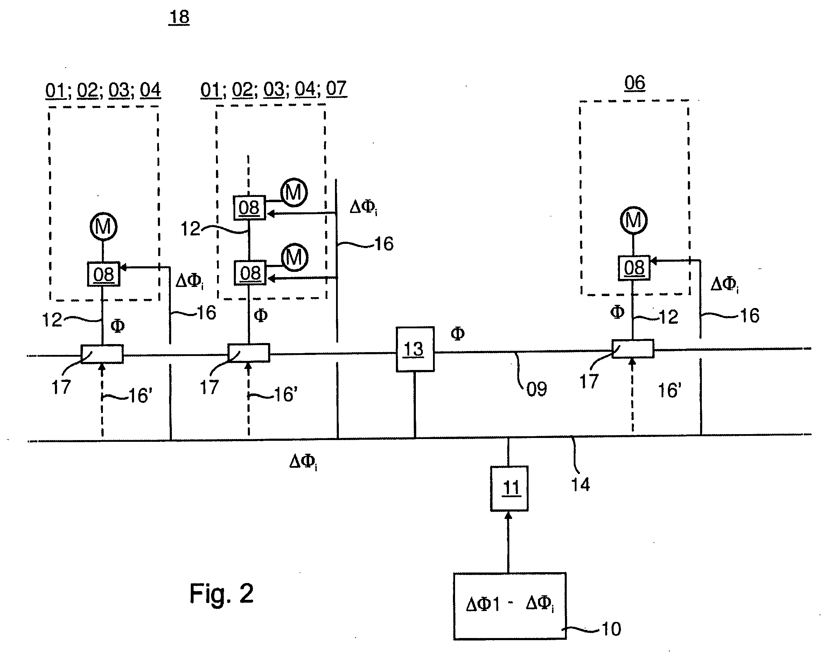

Im Unterschied zu Fig. 1 ist in Fig. 2 für die Übermittlung des jeweiligen Offset ΔΦᵢ (und ggf. sonstiger relevanter Daten) eine von der Signalleitung 09 verschiedene Signalleitung 14 vorgesehen. Des weiteren ist für die Verbindung zwischen der Signalleitung 09 und der Signalleitung 12, bzw. zwischen der übergeordneten Antriebssteuerung 13 und dem Antrieb 08, jeweils ein Kommunikationsknoten 17, z. B. eine untergeordnete Antriebssteuerung 17, vorgesehen.

Die Recheneinheit 13 für die Vorgabe der Leitachsposition Φ ist z. B. über die Signalleitung 14 mit der Rechen- und Datenverarbeitungseinheit 11 verbunden, von welcher sie beispielsweise wieder Vorgaben im Hinblick auf Produktionsgeschwindigkeit bzw. aktuelle Solldrehzahl erhält. Die jeweils aktuelle Leitachsposition Φ wird nun durch die übergeordnete Antriebssteuerung 13 vorgegeben und in die Signalleitung 09 eingespeist. Von dort wird die Information über die umlaufende Leitachsposition Φ jeweils über die Kommunikationsknoten 17, an die Signalleitung 12 gegeben und dort direkt den für die aktuelle Produktion relevanten Antrieben 08 zugeführt. Ein Kommunikationsknoten 17 kann, wie in Fig. 2 dargestellt, über die Signalleitung 12, z. B. ein Netzwerk 12 in Ring- oder Bustopologie, mit mehreren, jeweils durch einen Antriebsmotor M angetriebene untergeordnete Einheiten, wie z. B. Druckeinheiten 02, Druckwerken 03 oder Zylindern 04, verbunden sein. Die in der Weise über einen Kommunikationsknoten 17 zusammen gefaßten untergeordneten Einheiten werden im folgenden als Gruppe 18 von mechanisch unabhängig voneinander angetriebenen Einheiten bzw. Aggregaten bezeichnet. Der Kommunikafionsknoten 17 gibt in diesem Fall z. B. die Leitachsposition Φ aus der Signalleitung 09 an die Antriebe 08 aller (im Rahmen der Produktion beteiligten) nachgeordneter Einheiten bzw. Aggregate, z. B. Druckeinheiten 02 oder Druckwerke 03, dieser Gruppe 18 weiter.

Die mittlere Einheit stellt im Beispiel der Fig. 2 eine derartige Gruppe 18 von mehreren Untereinheiten, z. B. zwei Druckeinheiten 02, zwei Druckwerken 03 oder zwei Leitelementen 07 etc. dar, deren Antriebe 08 beide über den Kommunikationsknoten 17 die Leitachsposition Φ erhalten.

In einer ersten Ausführung erfolgt die Übergabe der produktionsspezifischen Offsetwerte ΔΦᵢ von der Rechen- und Datenverarbeitungseinheit 11 her bzw. vom Leitstand 10 her an die einzelnen Antriebe 08 der Einheiten, wo sie gespeichert und mit der Leitachsposition Φ zusammen weiterverarbeitet werden. Die Übermittlung erfolgt hier z. B. in Baumstruktur von der Signalleitung 14 über eine gemeinsame Signalleitung 16 je Aggregat (oder sternförmig über mehrere getrennte Signalleitungen 16 je Aggregat) zu den Antrieben 08 hin (durchgezogene Linien).

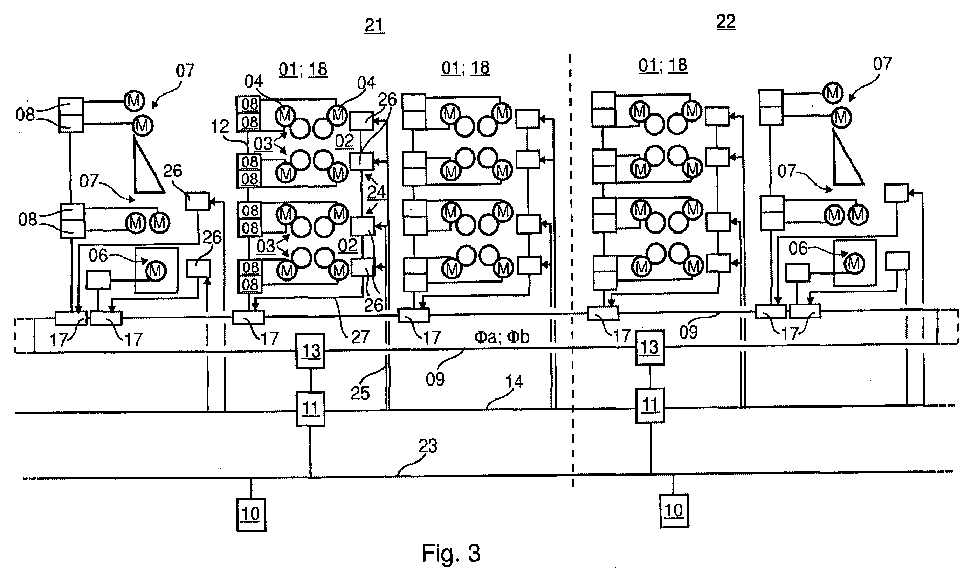

In einer zweiten Ausführung (strichliert) erfolgt die Übermittlung des Offset ΔΦᵢ von der Signalleitung 14 über logische Verbindungen 16' direkt oder indirekt zu den jeweiligen Kommunikationsknoten 17. Die physikalische Ausführung der logischen Verbindungen 16' kann direkt oder indirekt über weitere Verbindungen wie Buskoppler, Bridges etc., oder z. B. über ein in Fig. 1 oder 3 dargestelltes Steuersystem 24, erfolgen. Die Signalleitung(en) 16 können hierbei entfallen. In einer ersten Variante dieser Ausführung wird der spezifische Offset ΔΦᵢ vom Kommunikationsknoten 17 lediglich über die Signalleitung 12 dem entsprechenden Antrieb 08 zugeführt und dort gespeichert wird.

In einer zweiten, vorteilhaften Variante ist der Kommunikationsknoten 17 als untergeordnete Antriebssteuerung 17 mit einem Speicher und einer eigenen Intelligenz in der Weise ausgeführt, dass dort die für die zugeordneten Antriebe 08 und die spezifische Produktion vorgegebenen Offsetwerte ΔΦᵢ gespeichert werden, und dass den an der Produktion beteiligten Antrieben 08 jeweils an diese adressierte spezifische Leitachspositionen Φᵢ' (Φᵢ' = Φ + ΔΦᵢ), z. B. als Soll-Winkellage Φᵢ' durch die untergeordnete Antriebssteuerung 17 zugeführt werden. Der angegebene Zusammenhang soll hier und im folgenden lediglich das Prinzip verdeutlichen. Selbstverständlich sind beim Folgen der spezifischen Leitachsposition Φᵢ' die Umfänge der anzutreibenden Aggregate etc. zu berücksichtigen, so dass ein realer Zusammenhang z. B. weitere aggregatspezifische Faktoren aufweist.

Die Rechen- und Datenverarbeitungseinheit 11 steht somit einerseits über die übergeordnete Antriebssteuerung 13, die Signalleitung 09 (Quer-Kommunikation), den jeweiligen Kommunikationsknoten 17 sowie die Signalleitungen 12, z. B. Busse 12 in Verbindung zu den Antrieben 08. Auch Informationen über die Konfiguration (Zukupplung von Druckeinheiten 02 und/oder Druckwerken 03) oder die gemeinsame Produktionsgeschwindigkeit können auf diesem Weg ausgetauscht werden.

Die Rechen-und Datenverarbeitungseinheit 11 zur Übermittlung der Information zum spezifischen Offset ΔΦᵢ wie oben beschrieben entweder über die Signalleitung 14 und die Signalleitungen 16 oder aber über die Signalleitung 14, die logische Verbindung 16', die Kommunikationsknoten 17 und die Signalleitungen 12 mit den entsprechenden Antrieben 08 in Verbindung.

Im Ausführungsbeispiel gemäß Fig. 2 sind die Antriebsmotoren M bzw. die Antriebe 08 der Gruppe 18 untereinander und mit der untergeordneten Steuerung 17 verbunden. Die untergeordneten Steuerungen 17 der Gruppen 18 oder Einheiten sind über mindestens eine Signalleitung 09 miteinander und mit der übergeordneten Antriebssteuerung 13 verbunden. Zusätzlich ist hier die Rechen- und Datenverarbeitungseinheit 11 zur Übermittlung der spezifischen Offsetwerte ΔΦᵢ über mindestens eine Signalleitung 14 mit den Antrieben 08 bzw. den Kommunikationsknoten 17 verbunden.

Die Signalleitung 09 ist in vorteilhafter Ausführung als echtzeitfähige Verbindung 09 mit festem Zeitrahmen für echtzeitrelevante Daten und deterministischem Zeitverhalten ausgebildet. Die Verbindung 09 kann zusätzlich einen Kanal aufweisen, in welchem beispielsweise nicht echtzeitrelevante Daten, wie z. B. die Übermittlung der spezifischen Offsetwerte ΔΦᵢ gemäß der Ausführung nach Fig. 1 und/oder Informationen über die Konfiguration, Produktionsgeschwindigkeit etc. gemäß der Ausführung nach Fig. 1 übertragen werden.

Auch die Signalleitung 12 ist in vorteilhafter Ausführung als echtzeitfähige Verbindung 12 mit festem Zeitrahmen für echtzeitrelevante Daten und deterministischem Zeitverhalten ausgeführt. Die Verbindung 12 kann zusätzlich einen Kanal aufweisen, in welchem beispielsweise nicht echtzeitrelevante Daten, wie z. B. die Übermittlung des Offset ΔΦᵢ und/oder Informationen über die Konfiguration, Produktionsgeschwindigkeit etc. übertragen werden.

Die Signalleitung 14 und 16 ist vorzugsweise als Netzwerk 14 oder als Teil eines Netzwerkes 14 ausgebildet. Dieses Netzwerk 14 kann in vorteilhafter Ausführung als Netzwerk 14 nach einem stochastischem Zugriffsverfahren arbeiten. Die Datenübertragung sollte jedoch zumindest im Halb-Duplex-Betrieb möglich sein.

Fig. 3 zeigt ein Beispiel für den Antrieb einer Druckmaschine mit mehreren, hier drei, Drucktürmen 01, welche jeweils mehrere Druckwerke 03, hier Doppeldruckwerke 03, aufweisen. Die Druckwerke 03 eines Druckturms 01 bilden zusammen mit ihren Antrieben 08 und den Motoren M eine Gruppe 18, insbesondere eine Druckstellengruppe 18, welche über die untergeordnete Antriebssteuerung 17 dieser Gruppe 18 mit der Signalleitung 09 verbunden ist. Die Antriebssteuerung 13 kann jedoch auch Untergruppen 02 von Druckwerken 03, z. B. Druckeinheiten 02 oder andere Teilungen mit zugeordneten Antrieben 08 verwalten. Mit dieser Signalleitung 09 sind auch weitere, eine eigene untergeordnete Antriebssteuerung 17 aufweisende Einheiten, z. B. ein oder mehrere Leitelemente 07 und/oder ein oder mehrere Falzapparate 06 verbunden. Die Signalleitung 09 ist hier vorteilhaft in Ringtopologie, insbesondere als Doppelring, ausgeführt und weist eine oder mehrere der oben zu Fig. 2 genannten Eigenschaften auf.

Die Signalleitung 09 ist mit mehreren, hier zwei, übergeordneten Antriebssteuerungen 13 verbunden, welche jeweils voneinander verschiedene Signale einer jeweiligen Leitachsposition Φa; Φb einer Leitachse a; b in die Signalleitung 09 einspeisen können. Dies ist beispielsweise von Vorteil, wenn die Druckmaschine bzw. deren Drucktürme 01 und/oder Druckeinheiten 02 und/oder Druckwerke 03 und die zugehörigen Falzapparate 06 sowie Leitelemente 07 mehreren, getrennt oder gemeinsam betreibbaren Sektionen 21; 22 zuordenbar sein sollen. Es können jedoch Produktionen und Bahnführungen die in Fig. 3 durch eine strichlierte Linie angedeutete Sektionstrennung überschreiten und aus Druckeinheiten 02 der einen, in Druckeinheiten 02 der anderen und/oder den Falzapparat 06 der anderen Sektion 21; 22 geführt werden. Die einzelnen Drucktürme 01 sind beispielsweise verschiedenen Falzapparaten 06 zuordenbar. Auch innerhalb eines Druckturmes 01 sind Untergruppen, z. B. Druckeinheiten 02, verschiedenen Bahnen mit unterschiedlichen Bahnführungen zuordenbar, welche auf einen gemeinsamen oder gar auf verschiedene Falzapparate 06 geführt werden können. Die Sektionen 21; 22 sind logisch somit nicht als starre Einheiten zu verstehen

Die übergeordneten Antriebssteuerungen 13 beziehen ihre Vorgaben bezüglich Ausgangspunkt und Produktionsgeschwindigkeiten der jeweiligen Sektion 21; 22 und/oder Bahnführung von einer jeweils zugeordneten Rechen- und Datenverarbeitungseinheit 11, welche wiederum mit mindestens einem Leitstand 10 verbunden sind. In einer vorteilhaften Ausführung sind die beiden Rechen- und Datenverarbeitungseinheiten 11 über die Signalleitung 14 miteinander und mit einer weiteren Signalleitung 23 verbunden, welche mehrere, hier zwei, Leitstände 10 miteinander verbindet.

Die für die einzelnen Antriebe 08 relevanten Offsetwerte ΔΦᵢ werden für die betreffende Produktion von der Rechen- und Datenverarbeitungseinheit 11 bzw. den Rechen- und Datenverarbeitungseinheiten 11 über die Signalleitung 14 den dem jeweiligen Antrieb 08 zugeordneten untergeordneten Antriebssteuerungen 17 zugeleitet und in vorteilhafter Ausführung wie zu Fig. 2 beschrieben dort gespeichert und mit der Leitachsposition Φa; Φb zu den Leitachspositionen Φᵢ' verarbeitet. Sind Untergruppen, z. B. Druckeinheiten 02; einer Gruppe 18, z. B. eines Druckturms 01, zwei verschiedenen Bahnen zugeordnet, so verarbeitet die untergeordnete Antriebssteuerung 17 jeweils die für den betreffenden Antrieb 08 zugeordnete Leitachsposition Φa; Φb der Leitachse a oder b, je nach Zugehörigkeit der betreffenden Druckstelle zu der einen oder anderen Bahn, mit dem für diese Bahnführung vorgegebenen Offsetwert ΔΦᵢ.

Die Übermittlung an die untergeordneten Antriebssteuerungen 17 erfolgt in diesem Beispiel jedoch nicht direkt, sondern über ein Steuersystem 24, welches der jeweiligen Gruppe 18 bzw. der eine eigene untergeordnete Antriebssteuerung 17 aufweisende Einheit (z. B. Falzapparat 06) zugeordnet ist. Das Steuersystem 24 ist mit der Signalleitung 14 (bzw. mit der Rechen- und Datenverarbeitungseinheit 11) entweder beispielsweise über eigene Signalleitungen 25 verbunden oder aber die Leitungsabschnitte 25 sind Bestandteil der als Netzwerk 14 ausgeführten Signalleitung14. Das Steuersystem 24 steuert und/oder regelt beispielsweise die von den Antriebsmotoren M verschiedenen Stellglieder und Antriebe der Druckeinheiten 02 bzw. Druckstellengruppen 18 bzw. Druckwerke 03 bzw. Falzapparate 06, z. B. Farbzuführung, Stellbewegungen von Walzen und/oder Zylindern, Feuchtwerk, Positionen etc. Das Steuersystem 24 weist eine oder mehrere (insbesondere speicherprogrammierbare) Steuereinheiten 26 auf. Diese Steuereinheit 26 ist über eine Signalleitung 27 mit der untergeordneten Antriebssteuerung 17 verbunden. Im Fall mehrerer Steuereinheiten 26 sind diese durch die Signalleitung 27 auch untereinander verbunden.

Das Steuersystem 24 bzw. deren Steuereinheit(en) 26 ist/sind in vorteilhafter Ausführung durch nicht dargestellte Koppler, z. B. Buskoppler, lösbar mit der Signalleitung 14 verbunden. Hierdurch ist die Gruppe 18 prinzipiell für sich abgeschlossen betreibbar, wobei die Steuerung der Antriebe 08 über den Strang der untergeordneten Antriebssteuerung 17 mit Signalleitung 12 und die Steuerung der weiteren Funktionen der Gruppe 18 über den Strang des Steuersystems 24 erfolgt. Sollwerte sowie Istwerte und Abweichungen sind über den Koppler ein- bzw. ausgebbar. Die untergeordnete Antriebssteuerung 17 übernimmt in diesem Fall die Vorgabe einer Leitachsposition Φ. Aus diesem Grund und aus Gründen der Redundanz ist es vorteilhaft, wenn alle untergeordneten Antriebssteuerungen 17 mit der Möglichkeit zur Erzeugung und Vorgabe einer Leitachsposition Φ ausgebildet sind.

Die Offsetwerte ΔΦᵢ werden in der Ausführung nach Fig. 3 somit von der Signalleitung 14 über das jeweilige Steuersystem 24 der betreffenden untergeordneten Antriebssteuerung 17 zugeführt. Wie im Ausführungsbeispiel gemäß Fig. 2 beschrieben, können die Offsetwerte ΔΦᵢ alternativ von dort an die Antriebe 08 gegeben und dort gespeichert und verarbeitet werden.

Bei den Ausführungsbeispielen nach Fig. 2 und 3 kann die übergeordnete Antriebssteuerung 13 entfallen, wenn z. B. eine oder mehrere Gruppen 18 bzw. eine der eine eigene untergeordnete Antriebssteuerung 17 aufweisenden Einheiten (z. B. Falzapparat 06) eine untergeordnete Antriebssteuerung 17 aufweist. Die virtuelle Leitachse bzw. Leitachsposition Φ ist dann z. B. von einer der Antriebssteuerungen 17 vorgebbar.

Sehr vorteilhaft ist es, wie in Fig. 2 und 3 beschrieben, für den Umlauf einer noch nicht an den einzelnen Antrieb 08 angepassten Leitachse und die die Winkellage betreffenden Informationen (Offsetwerte ΔΦᵢ, Registerabweichungen) gesonderte Signalleitungen 09 bzw. 16; 16'; 14; 25; 27 vorzusehen. So kann einerseits die Grundausrichtung der einzelnen Antriebe 08 durch Übermittlung und/oder Veränderung der Offsetwerte ΔΦᵢ, als auch eine während der Produktion erforderliche Korrektur der Winkellage im Hinblick auf die Regelung des Längsregisters über die gesonderte Signalleitung 16; 16'; 14; 25; 27 an die untergeordneten Antriebssteuerungen 17 (bzw. die Antriebe 08 selbst) ausgeführt werden. Im Fall der Registerregelung wird beispielsweise ein entsprechender Stellwert über die Signalleitung 27 zur Steuerung 17 geführt und bei der Ermittlung der spezifischen Sollwinkellage für den einzelnen Antrieb 08 dem aus Leitachsposition und Offset ΔΦᵢ gebildeten Sollwert überlagert. Durch diese Vorgehensweise wird erhöhter Datenfluss über die die Leitachse führende Signalleitung 09 vermieden. Es müssen auch nicht viele unterschiedliche, auf die jeweiligen Antriebe 08 bereits angepasste Datenpakete durch diese Signalleitung 09 geführt werde. Dies hätte bezogen auf den einzelnen Antrieb 08 eine deutlich erniedrigte mögliche Signalrate zur Folge. Die untergeordneten Antriebssteuerungen 17 verwalten lediglich eine eng begrenzte Anzahl von Antrieben 08, so dass die Daten in den Signalleitungen 12 entsprechend handhabbar sind. Dies ist jedoch nicht vergleichbar mit der Anzahl sämtlicher, einer gesamten Sektion zugeordneter Antriebe 08.

Für alle beschriebenen Ausführungen wird mindestens eine Leitachsposition Φ; Φa; Φb durch mindestens eine Antriebssteuerung 13; 17 vorgegeben, an welcher bzw. an welchen sich die Antriebe 08 der verschiedenen mechanisch voneinander unabhängig angetriebenen Einheiten in ihrer Lage orientieren. Jedem dieser Antriebe 08 ist ein spezifischer Offsetwerte ΔΦᵢ zuordenbar, welcher jeweils die relative Soll-Lage zur Leitachsposition Φ; Φa; Φb der zugewiesenen Leitachse a; b ausdrückt. So werden beispielsweise für eine bestimmte Produktion sämtlichen mechanisch voneinander unabhängigen Antrieben 08 der Drucktürme 01 (bzw. Druckeinheiten 02 bzw. Druckwerke 03) sowie dem zugeordneten Antrieb 08 des Falzapparates 06 und ggf. Leiteinrichtungen 07 jeweils spezifische Offsetwerte ΔΦᵢ im Bezug auf die für die Produktion relevante Leitachse a; b zugeordnet.

Diese Offsetwerte ΔΦᵢ beruhen im wesentlichen auf rein geometrischen Verhältnissen. Zum einen sind sie von der gewählten Bahnführung, d. h. vom Bahnweg zwischen den einzelnen Einheiten abhängig. Zum anderen können sie von einer zufälligen oder gewählten Nullage des einzelnen Antriebs 08 abhängen. Letzteres entfällt für den einzelnen Antrieb 08, wenn dessen definierte Nullage mit der Nullage der Leitachse a; b zusammen fällt.

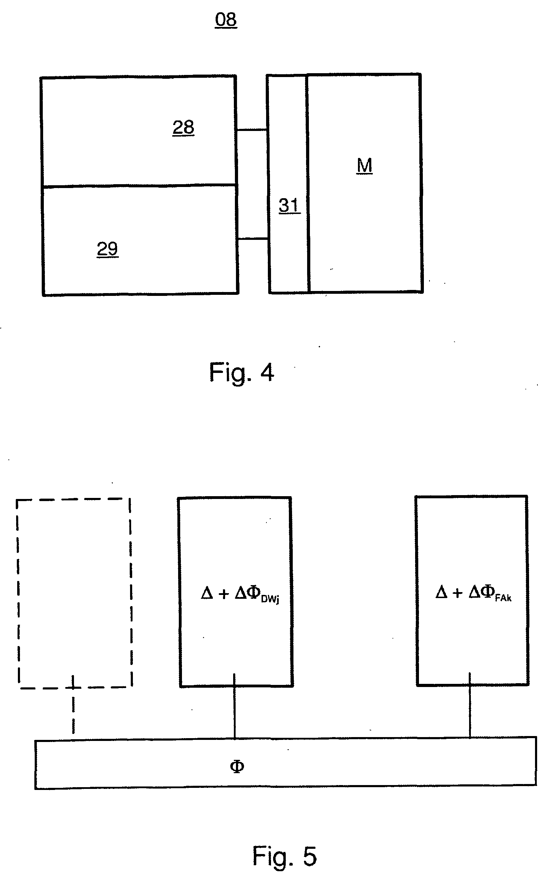

Fig. 4 stellt schematisch Bestandteile eines Antriebes 08 mit Antriebsmotor M dar. Der Antrieb 08 weist zumindest einen Regler 28 sowie z. B. ein Leistungsteil 29 zur Einspeisung der Energie auf. Der Antrieb 08 steht mit einem Sensor 31, insbesondere einem Winkelimpulsgeber 31, in Verbindung, welcher dem Regler 28 die aktuelle Drehwinkellage des Antriebsmotors M bzw. der anzutreibenden Einheit rückmeidet. Der Winkelimpulsgeber 31 ist mit einer nicht dargestellten Welle des Antriebsmotors M verbunden und folgt deren Drehbewegung (1 : 1 oder in anderer definierter Weise). Der Winkelimpulsgeber 31 kann auch an der durch den Antriebsmotor M anzutreibenden Einheit angeordnet sein.

Eine Grundeinstellung der Antriebe 08 bzw. die Ermittlung und Festlegung der Offsetwerte ΔΦᵢ erfolgt nun beispielsweise folgendermaßen:
Vor der Erst-inbetriebnahme ist an den Druckeinheiten 02 bzw. Druckwerken 03 und am Falzapparat 06 eine sog. Registergrundstellung (0-Stellung) als Referenzstellung anzufahren. Das selbe gilt nach Austausch eines oder mehrerer Antriebe 08 für die davon betroffenen Einheiten bzw. Aggregate. Diese Referenzstellung ist die Stellung, in der Falzapparat 06 zur Druckeinheit 02 (bzw. zum Druckwerk 03) bzw. der Formzylinder 04 (und der Gegendruckzylinder innerhalb eines Druckwerks 03) registerhaltig zueinander stehen. Die Referenzstellung ist in vorteilhafter Ausführung an zumindest den Formzylindern 04 (und den Gegendruckzylindern) der Druckwerke 03 und an einem zumindest einem der Zylinder bzw. Walzen des Falzapparates 06, insbesondere am Schneidzylinder, durch eine mechanische Sichtmarke festgelegt.

Der zu referenzierende Antrieb 08 bzw. Antriebsmotor M wird hierzu mechanisch oder im elektrischen Rückbetrieb auf die mechanische Sichtmarke gestellt. Am Antrieb 08 bzw. dessen Regler 28 wird der Wert des Winkelimpulsgebers 31 z. B. manuell oder mittels eines Sevice-PC als Null-Position eingespeichert. Alternativ kann die Einspeicherung über den Befehl "Referenzstellung übernehmen" am Leitstand 10 erfolgen, wobei der Wert des angeschlossenen Winkelimpulsgebers ebenfalls als Null-Position im Antrieb 08 bzw. dessen Regler 28 gespeichert wird.

Da die von der mechanischen Sichtmarke übernommene Null-Position i. d. R. lediglich einen groben Wert darstellt, wird nun, abhängig von der Bahnführung und weiteren Faktoren, der tatsächliche Offsetwert ΔΦᵢ bzw. Winkelversatz ΔΦᵢ zur Leitachsposition Φ; Φa; Φb entsprechend dem Druckbild bzw. des Schnittes nach dem ersten Druck z. B. manuell oder durch entsprechende Messvorrichtungen ermittelt. I. d. R. erfolgt die Ermittlung der Offsetwerte ΔΦᵢ nicht im Winkelmaß sondern als Länge, z. B. in mm. Dies ändert jedoch nichts am grundsätzlichen Prinzip der Ermittlung und Speicherung sondern lediglich in der weiteren Verarbeitung, da das Längenmaß mit Kenntnis des Umfangs der betreffenden, mit der Bahn zusammenwirkender Einheiten in ein Winkelmaß umrechenbar ist und umgekehrt.

Die z. B. in mm ermittelte Wert für den Offset ΔΦᵢ der einzelnen Antriebe 08 der Druckwerke 03 und des Falzapparates 06 werden am Leitstand 10 oder in der Rechen-und Datenverarbeitungseinheit 11 abgespeichert. Zusätzlich ist es von Vorteil, wenn dieser Satz von Offsetwerten ΔΦᵢ (z. B. in mm) mit Bezug zu Daten für die spezifische Bahnführung abgespeichert werden bzw. umgekehrt.

Die Eingabe der Offsetwerten ΔΦᵢ (z. B. in mm) erfolgt beispielsweise über eine Eingabemaske für die sog. Druckregistereingabe bzw. den Druckversatz. Diese Offsetwerte ΔΦᵢ (z. B. in mm) werden über die Signalleitung 14 (und falls vorhanden die Signalleitung 23) wie oben beschrieben an die Antriebe 08 oder an die untergeordneten Antriebssteuerungen 17 weitergegeben. Falls die Eingabe in mm erfolgt ist werden die Werte ins Winkelmaß umgerechnet. So werden die z. B. in mm vorliegenden Offsetwerte ΔΦᵢ wenn sie über die Steuersysteme 24 (gemäß Fig. 3) übermittelt werden, dort auf die entsprechenden Offsetwerte ΔΦᵢ als Winkelwert umgerechnet. Diese in Winkel umgerechnete Offsetwerte ΔΦᵢ werden wiederum von dem Steuersystem 24 bzw. den Steuereinrichtungen 26 dem zugeordneten untergeordneten Antriebsregler 17 weitergegeben und dort als Offsetwerte ΔΦᵢ (im Winkelmaß) gespeichert.

In gleicher Weise wird der Offset ΔΦᵢ für den Antrieb 08 des Falzapparates 06 am Leitstand 10 und/oder an der Rechen- und Datenverarbeitungseinheit 11 über den sog. Falz-Druckversatz eingegeben, die Speicherung dieses Offsetwertes ΔΦᵢ erfolgt im Antrieb 08 des Falzapparates 06.

Offsetwerte ΔΦᵢ, können grundsätzlich beliebige, sich aus dem Versatz zur Leitachse a; b ergebende Werte einnehmen. Für einzelne Antriebe 08 der Druckwerke 03 oder des Falzapparates 06 kann der Offsetwert ΔΦᵢ auch Null sein, d. h. kein Versatz vorliegt.

Zur Automatisierung können die manuell ermittelten Offsetwerte ΔΦᵢ abhängig von der Bahnführung über den Leitstand 10 gespeichert und bei Wiederholung dieser Produktion abgerufen und erneut über den o. g. Weg an die Antriebe 08 weitergeleitet werden.

Wird die Druckmaschine bzw. die betreffende Einheit nun gefahren, so folgt der Antrieb 08 mit seiner Null-Position plus addiertem Offset ΔΦᵢ der Leitachsposition Φ; Φa; Φb und hat somit immer die richtige Lage. Fig. 5 stellt schematisch diesen Sachverhalt dar, mit der dem Druckwerk 03 und dem Falzapparat 06 gemeinsame Leitachse a; b und der Leitachsposition Φ; Φa; Φb. Das Druckwerk 03 bzw. der dieses antreibende Antrieb 08 erhält die Lage Φ + ΔΦ_{DWj}, also der Summe aus der Leitachsposition Φ; Φa; Φb und dem für das j-te Druckwerk 03 spezifischen Offset ΔΦ_{DWi} (bei dieser Bahnführung), und der Falzapparat 06 bzw, dessen Antrieb 08 die Lage Φ + ΔΦ_{FAk}, also der Summe aus der Leitachsposition Φ; Φa; Φb und dem für den k-ten Falzapparat 06 spezifischen Offset ΔΦ_{FAK} (bei dieser Bahnführung). Die Zusammenhänge stellen wie oben bereits erläutert das vereinfachte Prinzip ohne weitere aggregatspezifische Faktoren dar.

In vorteilhafter Ausführung ist eine Korrektur des jeweiligen Offset ΔΦᵢ auch im Fortdruck bzw. bei laufender Maschine am Leitstand 10 oder/und der Rechen- und Datenverarbeitungseinheit 11 möglich.

Ein Anfahren bzw. Fahren der Druckmaschine erfolgt z. B. folgendermaßen:
Zur Vorbereitung einer bestimmten Produktion werden nun über den Leitstand 10 manuell oder über vorgehaltene (abgespeicherte) oder über ein übergeordnetes Produktionssystem eingelesene Daten alle für diese Produktion erforderlichen Einheiten bzw. Aggregate konfiguriert und deren Antriebe 08 somit an die betreffende Leitachse a; b angekoppelt.

Anschließend ist beispielsweise ein Einziehen der Bahn bzw. der Bahnen möglich. Hierzu erfolgt beispielsweise auf ein Kommando "Einziehen" (ggf. nach Vorwarnung des Systems, dass die Netzschütze der Antriebe 08 an sind, und ein ggf. erneutes Kommando) die Freigabe der Bewegung Leitachse a; b.

In gleicher oder ähnlicher Weise kann ein Anfahren bei bereits eingezogener Bahn bzw. eingezogenen Bahnen erfolgen.

Die Leitachsposition Φ; Φa; Φb startet beim Anfahren oder Neustart der Produktion in vorteilhafter Ausführung z. B. von einer definierten Stillstandsposition (Winkellage Null oder ein anderer fester vorgegebener Wert) oder in vorteilhafter Ausführung von der in z. B. einem Permanentspeicher abgespeicherten letzten Position (letzter Zählerstand bzw. Winkel vor Wiederaufnahme der Bewegung). Alle gekoppelten Antriebe 08 mit Anforderung an Registerhaltigkeit haben sich im Folgernden entsprechend ihrer Vorgaben (Offsetwerte ΔΦᵢ) an diese Vorgabe auszurichten.

Periodisch nach verstreichen eines Zeitintervalls, z. B. 2 bis 5 ms, wird eine neue Leitachsposition Φ; Φa; Φb von der übergeordneten Antriebssteuerung 13 an alle die Produktion betreffenden Antriebe 08 bzw. die untergeordneten Antriebssteuerungen 17 über die Signalleitung 09 vorgegeben. Beim Anfahren dreht die Leitachse a; b beispielsweise mit einer verminderten Geschwindigkeit bzw. Drehzahl, z. B. entsprechend 1 m/min. Die verschiedenen Antriebe 08 können zu Beginn u. U. beliebig "verdreht" zur Leitachse a; b stehen.

Die Antriebe 08 folgen nun alle dieser Leitachsposition Φ; Φa; Φb bzw. den spezifische Leitachspositionen Φᵢ', d. h. die Maschine dreht. Weisen Antriebe 08, an welche die Anforderung an Registerhaltigkeit gestellt ist (z. B. der Druckwerke 03 und des Falzapparates 06), noch Abweichungen von den jeweils spezifische Leitachspositionen Φᵢ' auf, so drehen diese schneller oder langsamer, bis sie die spezifische Leitachspositionen Φᵢ' erreicht haben, d. h. sie synchronisieren.

Alle an der Bahn befindlichen Leitelemente 07, z. B. Zugelemente, synchronisieren sich zumindest bezüglich ihrer Umfangsgeschwindigkeit auf die Leitachsposition Φ; Φa; Φb bzw. deren Winkelgeschwindigkeit.

In vorteilhafter Ausführung wird die Produktionsgeschwindigkeit erst nach Rückmeldung des Synchronlaufs (Lage- bzw. Geschwindigkeitsynchronität) aller Antriebe 08 erhöht, z. B. auf eine Drehzahl entsprechend einem Bahnlauf von 5 m/min.

Die Leitachsposition Φ; Φa; Φb wird bei konstanter Geschwindigkeit beispielsweise von der übergeordneten Antriebssteuerung 13 alle 2 bis 5 ms an die Antriebe 08 bzw. die untergeordneten Antriebssteuerungen 17 weitergegeben. Ein Kommando "Schneller" ergibt eine größere Winkeldifferenz von alt zu neu, ein Kommando "Langsamer" ergibt eine kleinere Winkeldifferenz von alt zu neu. Bei Betätigung von "Halt" und/oder Sperren" fahren alle durch die Leitachse a; b geführten Antriebe 08 über z. B. eine Rampe zurück auf Drehzahl Null und die Netzschütze der Antriebe 08 schalten beispielsweise ab, eine Falzapparat-Bremse wird in vorteilhafter Ausführung aktiv.

Durch die beschriebene Betriebsweise gibt die Leitachse a; b zu jedem Zeitpunkt (abgesehen von der o. g. Taktfrequenz der Positionsübermittlung) immer die Position vor und alle gekuppelten Antriebe 08 folgen dieser Position.

Die für diese Produktion bzw. Bahnführung ermittelten (und ggf. nachgestellten) Offsetwerte ΔΦᵢ werden beispielsweise in der Rechen- und Datenverarbeitungseinheit 11 oder dem Leitstand 10 abgespeichert und vorgehalten. Soll zu einem späteren Zeitpunkt die gleiche Produktion bzw. Bahnführung gefahren werden, so können diese Offsetwerte ΔΦᵢ abgerufen und über die oben beschriebenen Wege den Antrieben 08 bzw. den Antriebssteuerungen 13 oder insbesondere Antriebssteuerung 17 zugeführt werden. Dies kann beispielsweise automatisch mit dem Abrufen einer bereits gespeicherten oder durch ein übergeordnetes Druckereiverwaltungssystem an den Leitstand 10 übermittelte Konfigurierung erfolgen.

In einer Variante wird beim Anfahren bzw. Neustart der Produktion die Leitachsposition Φ; Φa; Φb aus der momentanen Winkellage eines Antriebes 08 von einer der Einheiten bzw. Aggregate übernommen. In diesem Fall liegt zumindest zu Beginn ein Offsetwert ΔΦᵢ von Null zwischen diesem Antrieb 08 und der Leitachsposition Φ; Φa; Φb vor. Die übrigen gekoppelten Antriebe 08 mit Anforderung an Registerhaltigkeit haben sich im weiteren Verlauf entsprechend ihrer Vorgaben (Offsetwerte ΔΦᵢ) wie oben beschrieben an der Leitachsposition Φ; Φa; Φb auszurichten. Hierbei gibt die Leitachse a; b wieder zu jedem Zeitpunkt die Position vor und alle gekuppelten Antriebe 08 (auch z. B. der zur Ausrichtung der Leitachse a; b herangezogene Antrieb 08) folgen dieser Position. Der zur Ausrichtung herangezogene Antrieb 08 kann dann im weiteren Verlauf des Anfahrens und/oder der Produktion zur Korrektur mit einem Offsetwert ΔΦᵢ, ungleich Null beaufschlagt werden, da nach der Ausrichtung der Leitachse a; b im Stillstand alle gekoppelten Antriebe 08 sich nur noch an der Leitachse a; b orientieren.

Dieser zur Ausrichtung herangezogene Antrieb 08 kann prinzipiell jeder Antrieb 08 mit Anforderung an Registerhaltigkeit, z. B. ein Antrieb 08 eines Druckwerks 03, sein. In vorteilhafter Ausführung wird zur Ausrichtung jedoch der Antrieb 08 des Falzapparates 06 bzw. die Lage eines Zylinders des Falzapparates, z. B. des Schneidzylinders, herangezogen. Nach Ausrichtung, d. h. z. B. während des Betriebs erhält nun der Antrieb des Falzapparates 06 jedoch die Vorgabe wieder von der gemeinsamen Leitachse a; b.

In einer dritten Variante für die Ausrichtung und den Betrieb der Leitachse a; b wird die Leitachse a; b nicht nur zur Ausrichtung mit der Winkellage der zur Ausrichtung herangezogenen Aggregats bzw. Einheit, z. B. dem Falzapparates 06 bzw. dessen Antriebes 08, synchronisiert, sondern erhält ihre Lage auch im Betrieb permanent oder zyklisch von der Lage dieser Einheit bzw. dieses Aggregates, z. B. vom Falzapparates. In dieser Variante wird die Lage aller übrigen Antriebe 08 über die Lage dieser Einheit bzw. dieses Aggregates vorgegeben, der Offsetwert ΔΦᵢ, zwischen diesem Aggregat und der Leitachse a; b ist immer Null.

Das Längsregister (Umfangs- und/oder Schnittregister) betreffend kann prinzipiell zwischen mindestens drei Fehlerarten unterschieden werden:
Die Drucke (Bilder) verschiedener Bahnen sind z. B. untereinander nicht registerhaltig, aber der Schnitt paßt zumindest mit einem Druck bzw. einer Bahn. Hier gleicht der Drucker z. B. entweder den Registerfehler durch Veränderung der Wegvorgaben, z. B. Veränderung beispielsweise einer Längsregisterwalze zwischen der letzten Druckstelle der betreffenden Bahn und dem Falzapparat 06 von Hand am Leitstand, aus. Es kann aber auch eine Änderung der Offsetwerte ΔΦᵢ für die Antriebe 08 der Druckwerke 03 dieser Bahn erfolgen. Beide Varianten können auch automatisch mit einer Registerregelung erfolgen.

Stimmen die Drucke untereinander, aber der Schnitt paßt nicht zum Druck, so ist eine Korrektur über den sog. Falz-Druckversatz, d. h. über eine Änderung des Offset ΔΦᵢ für den Antrieb 08 des Falzapparates 06, am Leitstand möglich. Der Offset ΔΦᵢ wird auf einen entsprechenden Wert verändert.

Stimmt in einem Druck die Lage der Farben zueinander in Umfangsrichtung nicht, so kann - am Leitstand 10 manuell oder unterstützt durch ein entsprechendes Regelsystem mit Sensor - der Offsetwert ΔΦᵢ einer oder mehrere betreffenden Druckwerke 03 geändert, und deren relative Lage zueinander verändert werden.

### Bezugszeichenliste

- 01: Druckturm
- 02: Druckeinheit, Untergruppe
- 03: Druckwerk. Doppeldruckwerk
- 04: Zylinder, Formzylinder
- 05: -
- 06: weiterverarbeitende Einheit, Falzapparat
- 07: Leitelement
- 08: Antrieb
- 09: Signalleitung, Verbindung
- 10: Bedieneinheit, Leitstand
- 11: Rechen- und Datenverarbeitungseinheit, Rechner
- 12: Signalleitung, Netzwerk, Busse
- 13: Recheneinheit, übergeordnete Antriebssteuerung
- 14: Signalleitung, Netzwerk
- 15: -
- 16: Signalleitung, Verbindung
- 17: Kommunikationsknoten, untergeordnete Antriebssteuerung
- 18: Gruppe, Druckstellengruppe
- 19: -
- 20: -
- 21: Sektion
- 22: Sektion
- 23: Signalleitung
- 24: Steuersystem
- 25: Signalleitung
- 26: Steuereinheit
- 27: Signalleitung
- 28: Regler
- 29: Leistungsteil
- 30: -
- 31: Sensor, Winkelimpulsgeber

- 16': logisch Verbindung

- Φ: Leitachsposition
- Φa: Leitachsposition
- Φb: Leitachsposition
- ΔΦᵢ: Offset, Offsetwert, Winkelversatz
- ΔΦ_{DWj}: Offset, j-tes Druckwerk
- ΔΦ_{FAk}: Offset, k-ter Falzapparat
- Φᵢ: spezifische Leitachsposition
- Φᵢ': Leitachsposition, Soll-Winkellage

- M: Antriebsmotor

## Patentansprüche

1. Antriebsvorrichtung einer Bearbeitungsmaschine mit mehreren Aggregaten (01; 02; 03; 04; 06; 07), welche mechanisch voneinander unabhängig durch Antriebsmotoren (M) über jeweils zugeordnete Antriebseinheiten (08) angetrieben sind, und mit mindestens einer die Antriebseinheiten (08) oder eine untergeordnete Antriebssteuerung (17) dieser Aggregate (01; 02; 03; 04; 06; 07) verbindenden ersten Signalleitung (09), welche Signale einer Leitachsposition (Φ) einer virtuellen Leitachse (a; b) führt, **dadurch gekennzeichnet, dass** den Antriebseinheiten (08) oder einer untergeordneten Antriebssteuerung (17) über mindestens eine zweite, von der ersten Signalleitung (09) verschiedene Signalleitung (14) jeweils ein Offset (ΔΦᵢ) zuführbar ist, welcher eine Verschiebung einer Soll-Winkellage (Φᵢ') gegenüber der Leitachsposition (Φ; Φa; Φb) festlegt.

2. Antriebsvorrichtung nach Anspruch 1, **dadurch gekennzeichnet, dass** die Signalleitung (09) mit einer die Signale der Leitachsposition (Φ) erzeugenden übergeordneten Steuerung (13;17) verbunden ist.

3. Antriebsvorrichtung nach Anspruch 2, **dadurch gekennzeichnet, dass** zwischen der übergeordneten Antriebssteuerung (13;17) und der Antriebseinheit (08) mindestens eine untergeordnete Antriebssteuerung (17) vorgesehen ist, an welche über die Signalleitung (09) Signale zur aktuellen Leitachsposition (Φ) und/oder zur Leitachsbewegung übermittelt werden, und welche dazu ausgebildet ist, eine spezifische Aufbereitung von Steuersignalen für mindestens eine einzelne, dieser untergeordneten Antriebssteuerung (17) zugeordneten Antriebseinheit (08) unter Verwendung der aktuellen Leitachsposition (Φ) und/oder Leitachsbewegung vorzunehmen.

4. Antriebsvorrichtung einer Bearbeitungsmaschine mit mehreren Aggregaten (01; 02; 03; 04; 06; 07), welche mechanisch voneinander unabhängig durch Antriebsmotoren (M) über jeweils zugeordnete Antriebseinheiten (08) angetriebenen sind, und mit mindestens einer die Antriebseinheiten (08) oder eine untergeordnete Antriebssteuerung (17) dieser Aggregate (01; 02; 03; 04; 06; 07) verbindenden ersten Signalleitung (09), welche Signale einer durch eine übergeordnete Steuerung (13; 17) erzeugte Leitachsposition (Φ) einer virtuellen Leitachse (a; b) führt, **dadurch gekennzeichnet, dass** zwischen der übergeordneten Antriebssteuerung (13; 17) und der Antriebseinheit (08) mindestens eine untergeordnete Antriebssteuerung (17) vorgesehen ist, an welche über die Signalleitung (09) Signale zur aktuellen Leitachsposition (Φ) und/oder zur Leitachsbewegung übermittelt werden, und welche dazu ausgebildet ist, eine spezifische Aufbereitung von Steuersignalen für mindestens eine einzelne, dieser untergeordneten Antriebssteuerung (17) zugeordneten Antriebseinheit (08) unter Verwendung der aktuellen Leitachsposition (Φ) und/oder Leitachsbewegung vorzunehmen, und dass den Antriebseinheiten (08) oder einer untergeordneten Antriebssteuerung (17) über mindestens eine zweite, von der ersten Signalleitung (09) verschiedene Signalleitung (14) jeweils ein Offset (ΔΦᵢ) zuführbar ist, welcher eine Verschiebung einer Soll-Winkellage (Φᵢ') gegenüber der Leitachsposition (Φ; Φa; Φb) festlegt.

5. Antriebsvorrichtung nach Anspruch 3 oder 4, **dadurch gekennzeichnet, dass** durch die untergeordnete Antriebssteuerung (17) mehreren dieser Antriebssteuerung (17) zugeordneten und an der Produktion beteiligten Antriebseinheiten (08) jeweils an diese adressierte spezifische Soll-Winkellagen (Φᵢ') zuführbar sind.

6. Antriebsvorrichtung nach Anspruch 1 oder 4, **dadurch gekennzeichnet, dass** der Offset (ΔΦᵢ) eine permanente aber veränderbare Verschiebung der Soll-Winkellage (Φᵢ') gegenüber der Leitachsposition (Φ; Φa; Φb) darstellt.

7. Antriebsvorrichtung nach Anspruch 1 oder 4, **dadurch gekennzeichnet, dass** zumindest eine Antriebseinheit (08) eines die Bahn bedruckenden Druckwerks (03) und eine Antriebseinheit (08) eines nachgeordneten, die Bahn weiterverarbeitenden Aggregates (06) jeweils mit der Signalleitung (09) verbunden sind und diesen beiden Antriebseinheiten (08) jeweils ein Offset (ΔΦᵢ) zuordenbar ist.

8. Antriebsvorrichtung nach Anspruch 1 oder 4, **dadurch gekennzeichnet, dass** die Antriebseinheiten (08) jeweils über eine untergeordnete Antriebssteuerung (17) mit der Signalleitung (09) verbunden sind.

9. Antriebsvorrichtung nach Anspruch 7, **dadurch gekennzeichnet, dass** das weiterverarbeitende Aggregat (06) als Falzapparat (06) ausgeführt ist.

10. Antriebsvorrichtung nach Anspruch 1 oder 4, **dadurch gekennzeichnet, dass** zumindest alle einer spezifischen Bahnführung zugeordneten Antriebseinheiten (08) für den rotatorischen Antrieb von Aggregaten (01; 02; 03; 04; 06; 07), welche die Anforderung an die Registerhaltigkeit in Transportrichtung der Bahn erfüllen müssen, in Verbindung mit einer gemeinsamen Signalleitung (09) stehen.

11. Antriebsvorrichtung nach Anspruch 10, **dadurch gekennzeichnet, dass** zumindest diesen Antriebseinheiten (08) jeweils ein Offset (ΔΦᵢ) zugeordnet ist.

12. Antriebsvorrichtung nach Anspruch 1 oder 4, **dadurch gekennzeichnet, dass** der Offsetwert (ΔΦᵢ) eines die Leitachsposition (Φ) vorgebenden Aggregates (01; 02; 03; 04; 06; 07) Null ist.

13. Antriebsvorrichtung nach Anspruch 1, **dadurch gekennzeichnet, dass** mehrere der Antriebseinheiten (08) dieser mechanisch voneinander unabhängig angetriebenen Aggregate (01; 02; 03; 04; 06; 07) über eine gemeinsame untergeordnete Antriebssteuerung (17) mit der Signalleitung (09) verbunden sind.

14. Antriebsvorrichtung nach Anspruch 13, **dadurch gekennzeichnet, dass** mehrere der Antriebseinheiten (08) mit ihren Aggregate (01; 02; 03; 04; 06; 07) eine Gruppe (18) bilden.

15. Antriebsvorrichtung nach Anspruch 14, **dadurch gekennzeichnet, dass** die Gruppe (18) mehrere Druckwerke (03) aufweist.

16. Antriebsvorrichtung nach Anspruch 14, **dadurch gekennzeichnet, dass** die Gruppe (18) mehrere Untergruppen (02), insbesondere Druckeinheiten (02), mit jeweils zumindest einem Druckwerk (03) aufweist.

17. Antriebsvorrichtung nach Anspruch 14, **dadurch gekennzeichnet, dass** die Antriebseinheiten (08) der Gruppe (18) verschiedenen Leitachsen (a; b) zuordenbar sind.

18. Antriebsvorrichtung nach Anspruch 1 oder 4, **dadurch gekennzeichnet, dass** die Signalleitung (09) Signale von Leitachspositionen (Φ; Φa; Φb) mehrerer virtueller Leitachsen (a; b) führt.

19. Antriebsvorrichtung nach Anspruch 16 und 18, **dadurch gekennzeichnet, dass** die Antriebseinheiten (08) der Untergruppen (18) durch die untergeordnete Steuerung (17) Soll-Winkellagen (Φᵢ') in Bezug auf unterschiedliche virtueller Leitachsen (a; b) beziehen.

20. Antriebsvorrichtung nach Anspruch 1 oder 4, **dadurch gekennzeichnet, dass** die spezifischen Offsetwerte (ΔΦᵢ) in der Antriebssteuerung (13; 17) vorgehalten sind.

21. Antriebsvorrichtung nach Anspruch 1 oder 4, **dadurch gekennzeichnet, dass** die spezifischen Offsetwerte (ΔΦᵢ) in der untergeordneten Antriebssteuerung (13; 17) vorgehalten sind.

22. Antriebsvorrichtung nach Anspruch 20 oder 21, **dadurch gekennzeichnet, dass** spezifische Soll-Winkellagen (Φᵢ') für die einzelnen Antriebseinheiten (08) in der Antriebssteuerung (13; 17) aus der Leitachsposition (Φ; Φa; Φb) und dem spezifischen Offsetwerte (ΔΦᵢ) gebildet und den betreffenden Antriebseinheiten (08) zugeführt sind.

23. Antriebsvorrichtung nach Anspruch 1 oder 4, **dadurch gekennzeichnet, dass** über die von der Signalleitung (09) verschiedene Signalleitung (14) die Aggregate (01; 02; 03; 04; 06; 07) untereinander und mit einer Rechen- und Datenverarbeitungseinheit (11) verbunden sind.

24. Antriebsvorrichtung nach Anspruch 23, **dadurch gekennzeichnet, dass** über diese Signalleitung (14) den untergeordneten Antriebssteuerungen (17) die Offsetwerte (ΔΦᵢ) zugeführt sind.

25. Antriebsvorrichtung nach Anspruch 23, **dadurch gekennzeichnet, dass** über diese Signalleitung (14) eine Kommunikation zwischen der Rechen- und Datenverarbeitungseinheit (11) und den Aggregate (01; 02; 03; 04; 06; 07) zumindest im Hinblick auf Sollwertvorgaben und Istwertübermittlung für von den Antriebseinheiten (08) verschiedene Stellglieder und/oder Antriebseinheiten der Aggregate (01; 02; 03; 04; 06; 07) erfolgt.

26. Antriebsvorrichtung nach Anspruch 1 oder 4, **dadurch gekennzeichnet, dass** eine Bedieneinheit vorgesehen ist, in welche die Offsetwerte (ΔΦᵢ) eingebbar sind.

27. Antriebsvorrichtung nach Anspruch 1 oder 4, **dadurch gekennzeichnet, dass** eine Speichereinheit vorgesehen ist, in welche die Offsetwerte (ΔΦᵢ) für die einzelnen Antriebseinheiten für eine spezifische Produktion speicherbar und bei Bedarf aus dieser auslesbar sind.

28. Verfahren zum Antrieb einer Bearbeitungsmaschine, wobei mehrere Aggregate (01; 02; 03; 04; 06; 07) mechanisch voneinander unabhängig durch Antriebseinheiten (08) angetriebenen werden, **dadurch gekennzeichnet, dass** in einer ersten Signalleitung (09) lediglich Signale einer noch nicht an die relative Soll-Winkellage der einzelnen Antriebe (08) angepassten Leitachsposition (Φ) einer virtuellen Leitachse (a; b) geführt werden, und dass in einer zweiten Signalleitung (16; 16'; 14; 25; 27) den Antriebseinheiten (08) oder einer untergeordneten Antriebssteuerung (17) dieser Aggregate (01; 02; 03; 04; 06; 07) jeweils ein spezifischer Offset (ΔΦᵢ) zugeführt wird, welcher eine Verschiebung einer Soll-Winkellage (Φᵢ') gegenüber der Leitachsposition (Φ; Φa; Φb) festlegt.

29. Verfahren nach Anspruch 28, **dadurch gekennzeichnet, dass** eine Ausgabe der für die an einer Produktion beteiligten Aggregate (01; 02; 03; 04; 06; 07) relevanten Leitachsposition (Φ) durch eine übergeordnete Antriebssteuerung (13) erfolgt, und dass eine Aufbereitung der spezifischen Soll-Winkellagen für die einzelnen Antriebseinheiten (08) der Aggregate (01; 02; 03; 04; 06; 07) erst in der untergeordneten Antriebssteuerung (17) erfolgt, welche die spezifischen Soll-Winkellagen als Vorgabe an die Regeleinrichtung (08) des einzelnen Aggregates (01; 02; 03; 04; 06; 07) übermittelt.

30. Verfahren nach Anspruch 28, **dadurch gekennzeichnet, dass** die spezifischen Offsetwerte (ΔΦᵢ) in einer mehreren nachgeordneten Antriebseinheiten (08) gemeinsam zugeordneten untergeordneten Antriebssteuerung (13; 17) vorgehalten werden.

31. Verfahren nach Anspruch 28, **dadurch gekennzeichnet, dass** spezifische Soll-Winkellagen (Φᵢ') für die einzelnen Antriebseinheiten (08) in der Antriebssteuerung (13;17) aus der Leitachsposition (Φ; Φa; Φb) und dem spezifischen Offsetwerte (ΔΦᵢ) gebildet und den betreffenden Antriebseinheiten (08) zugeführt werden.

32. Verfahren nach Anspruch 28, **dadurch gekennzeichnet, dass** die spezifischen Offsetwerte (ΔΦᵢ) in den einzelnen Antriebseinheiten (08) vorgehalten werden, und dass dort spezifische Soll-Winkellagen (Φᵢ') aus der Leitachsposition (Φ; Φa; Φb) und dem spezifischen Offsetwerte (ΔΦᵢ) gebildet werden.

33. Verfahren nach Anspruch 28, **dadurch gekennzeichnet, dass** die Offsetwerte (ΔΦᵢ) in einer Bedieneinheit eingegeben werden.

34. Verfahren nach Anspruch 28, **dadurch gekennzeichnet, dass** die Offsetwerte (ΔΦᵢ) für die einzelnen Antriebseinheiten (08) für eine spezifische Produktion in einer Speichereinheit gespeichert und bei Bedarf aus dieser ausgelesen werden.

## Claims

1. A driving apparatus of a processing machine with a plurality of units (01; 02; 03; 04; 06; 07), which are driven mechanically independently of one another by drive motors (M) by way of associated drive units (08) in each case, and with at least one first signal line (09) which connects the drive units (08) or a subordinate drive control device (17) of the said units (01; 02; 03; 04; 06; 07) and which conveys signals of a position (Φ) of a virtual leading shaft (a; b), **characterized in that** one offset (ΔΦᵢ), which fixes a displacement of a nominal angular position (Φᵢ') with respect to the leading-shaft position (Φ; Φa; Φb), is capable of being supplied in each case to the drive units (08) or a subordinate drive control device (17) by way of at least one second signal line (14) which is different from the first signal line (09).

2. A driving apparatus according to Claim 1, **characterized in that** the signal line (09) is connected to an overriding control device (13; 17) which produces the signals of the leading-shaft position (Φ).

3. A driving apparatus according to Claim 2, **characterized in that** at least one subordinate drive control device (17), to which signals relating to the current leading-shaft position (Φ) and/or relating to the leading-shaft movement are transmitted by way of the signal line (09) and which is designed to carry out a specific preparation of control signals for at least one individual drive unit (08) associated with the said subordinate drive control device (17) whilst using the current leading-shaft position (Φ) and/or the leading-shaft movement, is provided between the overriding drive control device (13; 17) and the drive unit (08).

4. A driving apparatus of a processing machine with a plurality of units (01; 02; 03; 04; 06; 07), which are driven mechanically independently of one another by drive motors (M) by way of associated drive units (08) in each case, and with at least one first signal line (09) which connects the drive units (08) or a subordinate drive control device (17) of the said units (01; 02; 03; 04; 06; 07) and which conveys signals of a leading-shaft position (Φ) - produced by an overriding control device (13; 17) - of a virtual leading shaft (a; b), **characterized in that** at least one subordinate drive control device (17), to which signals relating to the current leading-shaft position (Φ) and/or relating to the leading-shaft movement are transmitted by way of the signal line (09) and which is designed to carry out a specific preparation of control signals for at least one individual drive unit (08) associated with the said subordinate drive control device (17) whilst using the current leading-shaft position (Φ) and/or the leading-shaft movement, is provided between the overriding drive control device (13; 17) and the drive unit (08), and one offset (ΔΦᵢ), which fixes a displacement of a nominal angular position (Φᵢ') with respect to the leading-shaft position (Φ; Φa; Φb), is capable of being supplied in each case to the drive units (08) or a subordinate drive control device (17) by way of at least one second signal line (14) which is different from the first signal line (09).

5. A driving apparatus according to Claim 3 or 4, **characterized in that** specific nominal angular positions (Φᵢ'), which are addressed to a plurality of drive units (08) associated with the subordinate drive control device (17) and involved in the production, are capable of being supplied in each case by the said drive control device (17) to the said plurality of drive units (08).

6. A driving apparatus according to Claim 1 or 4, **characterized in that** the offset (ΔΦᵢ) represents a permanent but variable displacement of the nominal angular position (Φᵢ') with respect to the leading-shaft position (Φ; Φa; Φb).

7. A driving apparatus according to Claim 1 or 4, **characterized in that** at least one drive unit (08) of a printing couple (03) printing the web and one drive unit (08) of a unit (06) arranged downstream and further processing the web are connected in each case to the signal line (09), and one offset (ΔΦᵢ) is capable of being associated with the said two drive units (08).

8. A driving apparatus according to Claim 1 or 4, **characterized in that** the drive units (08) are connected in each case to the signal line (09) by way of a subordinate drive control device (17).

9. A driving apparatus according to Claim 7, **characterized in that** the further processing unit (06) is designed in the form of a folder (06).

10. A driving apparatus according to Claim 1 or 4, **characterized in that** at least all the drive units (08), associated with a specific web guidance, for the rotary drive of units (01; 02; 03; 04; 06; 07) which have to meet the requirement of observation of the register in the conveying direction of the web are connected to a common signal line (09).

11. A driving apparatus according to Claim 10, **characterized in that** one offset (ΔΦᵢ) is associated in each case with at least the said drive units (08).

12. A driving apparatus according to Claim 1 or 4, **characterized in that** the offset value (ΔΦᵢ) of a unit (01; 02; 03; 04; 06; 07) which pre-determines the leading-shaft position (Φ) is zero.

13. A driving apparatus according to Claim 1, **characterized in that** a plurality of the drive units (08) of the said units (01; 02; 03; 04; 06; 07) driven mechanically by one another are connected to the signal line (09) by way of a common subordinate drive control device (17).

14. A driving apparatus according to Claim 13, **characterized in that** a plurality of the drive units (08) with their units (01; 02; 03; 04; 06; 07) form a group (18).

15. A driving apparatus according to Claim 14, **characterized in that** the group (18) comprises a plurality of printing couples (03).

16. A driving apparatus according to Claim 14, **characterized in that** the group (18) comprises a plurality of sub-groups (02), in particular printing units (02), with at least one printing couple (03) in each case.

17. A driving apparatus according to Claim 14, **characterized in that** the drive units (08) of the group (18) are capable of being associated with different leading shafts (a; b).

18. A driving apparatus according to Claim 1 or 4, **characterized in that** the signal line (09) conveys signals of position[s] (Φ; Φa; Φb) of a plurality of virtual leading shafts (a; b).

19. A driving apparatus according to Claim[s] 16 and 18, **characterized in that** the drive units (08) of the sub-groups (18) relate nominal angular positions (Φᵢ') with respect to different virtual leading shafts (a; b) by the subordinate control device (17).

20. A driving apparatus according to Claim 1 or 4, **characterized in that** the specific offset values (ΔΦᵢ) are kept in advance in the drive control device (13; 17).

21. A driving apparatus according to Claim 1 or 4, **characterized in that** the specific offset values (ΔΦᵢ) are kept in advance in the subordinate drive control device (13; 17).

22. A driving apparatus according to Claim 20 or 21, **characterized in that** specific nominal angular positions (Φᵢ') are formed for the individual drive units (08) in the drive control device (13; 17) from the leading-shaft position (Φ; Φa; Φb) and the specific offset value (ΔΦᵢ) and are supplied to the drive units (08) in question.

23. A driving apparatus according to Claim 1 or 4, **characterized in that** the units (01; 02; 03; 04; 06; 07) are connected between themselves and to a calculating and data-processing unit (11) by way of the signal line (14) which is different from the signal line (09).

24. A driving apparatus according to Claim 23, **characterized in that** the offset values (ΔΦᵢ) are supplied to the subordinate drive control devices (17) by way of the said signal line (14).

25. A driving apparatus according to Claim 23, **characterized in that** communication between the calculating and data-processing unit (11) and the units (01; 02; 03; 04; 06; 07) takes place by way of the said signal line (14) at least with respect to nominal-value pre-set figures and actual-value transmission for control members and/or drive units of the units (01; 02; 03; 04; 06; 07), which are different from the drive units (08).

26. A driving apparatus according to Claim 1 or 4, **characterized in that** an operating unit is provided into which the offset values (ΔΦᵢ) are capable of being fed.

27. A driving apparatus according to Claim 1 or 4, **characterized in that** a memory unit is provided in which the offset values (ΔΦᵢ) for the individual drive units for a specific production are capable of being stored and are capable of being read out when required.

28. A method of driving a processing machine, wherein a plurality of units (01; 02; 03; 04; 06; 07) are driven mechanically independently of one another by drive units (08), **characterized in that** only signals of a leading-shaft position (Φ) - not yet adapted to the relative nominal angular position of the individual drives (08) - of a virtual leading shaft (a; b) are conveyed in a first signal line (09), and a specific offset (ΔΦᵢ), which fixes a displacement of a nominal angular position (Φᵢ') with respect to the leading-shaft position (Φ; Φa; Φb), is supplied to the drive units (08) or a subordinate control device (17) of the said units (01; 02; 03; 04; 06; 07) in a second signal line (16; 16'; 14; 25; 27).

29. A method according to Claim 28, **characterized in that** an output of the leading-shaft position (Φ) which applies to the units (01; 02; 03; 04; 06; 07) involved in production takes place by an overriding drive control device (13), and a preparation of the specific nominal angular positions for the individual drive units (08) of the units (01; 02; 03; 04; 06; 07) takes place only in the subordinate control device (17) which transmits the specific nominal angular positions as a pre-set value to the regulating device (08) of the individual unit (01; 02; 03; 04; 06; 07).

30. A method according to Claim 28, **characterized in that** the specific offset values (ΔΦᵢ) are held in advance in a subordinate drive control device (13) associated jointly with a plurality of drive units (08) arranged downstream.

31. A method according to Claim 28, **characterized in that** specific nominal angular positions (Φᵢ') are formed for the individual drive units (08) in the drive control device (13; 17) from the leading-shaft position (Φ; Φa; Φb) and the specific offset value (ΔΦᵢ) and are supplied to the drive units (08) in question.

32. A method according to Claim 28, **characterized in that** the specific offset values (ΔΦᵢ) are held in advance in the individual drive units (08), and specific nominal angular positions (Φᵢ') are formed there from the leading-shaft position (Φ; Φa; (Φb) and the specific offset value (ΔΦᵢ).

33. A method according to Claim 28, **characterized in that** the offset values (ΔΦᵢ) are fed into an operating unit.

34. A method according to Claim 28, **characterized in that** the offset values (ΔΦᵢ) for the individual drive units (08) for a specific production are stored in a memory unit and are read out of the latter when required.

## Revendications

1. Dispositif d'entraînement d'une machine de traitement, comprenant plusieurs agrégats (01 ; 02 ; 03 ; 04 ; 06 ; 07), entraînés mécaniquement, indépendamment les uns des autres, par des moteurs d'entraînement (M), par l'intermédiaire chaque fois d'unités d'entraînement (08) associées, et avec au moins une première ligne de signalisation reliant les unités d'entraînement (08) ou une commande d'entraînement (17), hiérarchiquement inférieure, de ces agrégats (01 ; 02 ; 03 ; 04 ; 05 ; 06 ; 07), la ligne de signalisation guidant des signaux d'une position d'axe directeur (Φ) d'un axe directeur virtuel (a ; b), **caractérisé en ce qu'**aux unités d'entraînement (08) et/ou une commande d'entraînement (17) hiérarchiquement inférieure est susceptible d'être chaque fois amené, par l'intermédiaire d'au moins une deuxième ligne de signalisation (15), différente de la première ligne de signalisation (09), un offset (ΔΦᵢ) qui fixe un décalage entre une position angulaire de consigne (Φᵢ') par rapport à la position d'axe directeur (Φ; Φa; Φb).

2. Dispositif d'entraînement selon la revendication 1, **caractérisé en ce que** la ligne de signalisation (02) est reliée à une commande (13 ; 17) hiérarchiquement supérieure, générant les signaux de la position d'axe directeur (Φ).

3. Dispositif d'entraînement selon la revendication 2, **caractérisé en ce qu'**entre la commande d'entraînement (13 ; 17) hiérarchiquement supérieure et l'unité d'entraînement (08) est prévue au moins une commande d'entraînement (17) hiérarchiquement inférieure, à laquelle, par l'intermédiaire de la ligne de signalisation (09), sont transmis des signaux, concernant la position d'axe directeur actuel (Φ) et/ou le déplacement d'axe directeur, et qui est réalisée pour effectuer une préparation spécifique de signaux de commande pour au moins une unité d'entraînement (08) individuelle, associée à cette commande d'entraînement (17) hiérarchiquement inférieure, en utilisant la position d'axe directeur actuelle (Φ) et/ou le déplacement d'axe directeur.

4. Dispositif d'entraînement d'une machine de traitement comprenant plusieurs agrégats (01 ; 02 ; 03 ; 04 ; 06 ; 07), entraînés mécaniquement indépendamment les uns des autres par des moteurs d'entraînement (M) chaque fois par l'intermédiaire d'unités d'entraînement (08) associées et avec au moins une première ligne de signalisation (09), reliant les unités d'entraînement (08) ou une commande d'entraînement (17) hiérarchiquement inférieure de ces agrégats (01 ; 02 ; 03 ; 04 ; 06 ; 07), la ligne de signalisation guidant des signaux d'une position d'axe directeur (Φ), générée par une commande (13 ; 17) hiérarchiquement supérieure, d'un axe directeur virtuel (a ; b), **caractérisé en ce que**, entre la commande d'entraînement (13 ; 17) hiérarchiquement supérieure et l'unité d'entraînement (08), est prévue au moins une commande d'entraînement (17) hiérarchiquement inférieure, à laquelle, par l'intermédiaire de la ligne de signalisation (09), sont transmis des signaux, concernant la position d'axe directeur actuel (Φ) et/ou le déplacement d'axe directeur, et réalisée pour effectuer une préparation spécifique de signaux de commande pour au moins une unité d'entraînement (08) individuelle, associée à cette commande d'entraînement (17) hiérarchiquement inférieure, en utilisant la position d'axe directeur (Φ) actuelle et/le déplacement d'axe directeur, et **en ce qu'**aux unités d'entraînement (08) ou à une commande d'entraînement (17) hiérarchiquement inférieure, par l'intermédiaire d'au moins une deuxième ligne de signalisation (14), différente de la première ligne de signalisation (09), est chaque fois susceptible d'être amené un offset (ΔΦᵢ), fixant un décalage, d'une position angulaire de consigne (Φᵢ') par rapport à la position d'axe directeur (Φ; Φa; Φb).

5. Dispositif d'entraînement selon la revendication 3 ou 4, **caractérisé en ce qu'**aux moyens de la commande d'entraînement (17) hiérarchiquement inférieure, plusieurs unités d'entraînement (08), associées à cette commande d'entraînement (17) et participant à la production, sont susceptibles d'être chacune amenées à ces positions angulaires de consigne (Φᵢ') spécifiques adressées.

6. Dispositif d'entraînement selon la revendication 1 ou 4, **caractérisé en ce que** l'offset (ΔΦᵢ) constitue un décalage permanent ou modifiable de la position angulaire de consigne (Φᵢ') par rapport à la position d'axe directeur (Φ; Φa; Φb).

7. Dispositif d'entraînement selon la revendication 1 ou 4, **caractérisé en ce qu'**au moins une unité d'entraînement (08) d'un groupe d'impression (03), imprimant la bande, et une unité d'entraînement (08) d'un aggrégat (06) installé en aval, retraitant la bande, est chacune reliée à la ligne de signalisation (09) et chaque fois un offset (ΔΦᵢ) est susceptible d'être associé à ces deux unités d'entraînement (08).

8. Dispositif d'entraînement selon la revendication 1 ou 4, **caractérisé en ce que** les unités d'entraînement (08) sont chacune reliée à la ligne de signalisation (09), par l'intermédiaire d'une commande d'entraînement (17) hiérarchiquement inférieure.

9. Dispositif d'entraînement selon la revendication 7, **caractérisé en ce que** le aggrégat (06) assurant un retraitement est réalisé sous la forme d'appareil de pliage (06).

10. Dispositif d'entraînement selon la revendication 1 ou 4, **caractérisé en ce qu'**au moins toutes les unités d'entraînement (08) associées à un guidage de bande spécifique, pour l'entraînement en rotation de agrégats (01 ; 02 ; 03 ; 04 ; 06 ; 07), qui doivent satisfaire à l'exigence de respect du registre dans la direction de transport de la bande, sont reliées à une ligne de signalisation (09) commune.

11. Dispositif d'entraînement selon la revendication 10, **caractérisé en ce qu'**au moins chaque fois un offset (ΔΦᵢ) est associé à ces unités d'entraînement (08).

12. Dispositif d'entraînement selon la revendication 1 ou 4, **caractérisé en ce que** la valeur d'offset (ΔΦᵢ) d'un agrégat (01 ; 02 ; 03 ; 04 ; 06 ; 07) prédéterminant la position d'axe directeur (Φ) est nulle.

13. Dispositif d'entraînement selon la revendication 1 **caractérisé en ce que** plusieurs des unités d'entraînement (08) de ces agrégats (01 ; 02 ; 03 ; 04 ; 06 ; 07), entraînés mécaniquement indépendamment les uns des autres, sont reliées à la ligne de signalisation (09) par l'intermédiaire d'une commande d'entraînement (17) hiérarchiquement inférieur, commune.

14. Dispositif d'entraînement selon la revendication 13 **caractérisé en ce que** plusieurs des unités d'entraînement (08) forment avec leurs agrégats (01 ; 02 ; 03 ; 04 ; 06 ; 07) un groupe (18).

15. Dispositif d'entraînement selon la revendication 14, **caractérisé en ce que** le groupe (18) présente plusieurs groupes d'impression (03).

16. Dispositif d'entraînement selon la revendication 14, **caractérisé en ce que** le groupe (18) présente plusieurs sous-groupes (02), en particulier des unités d'impression (02) ayant chacune au moins un groupe d'impression (03).

17. Dispositif d'entraînement selon la revendication 14, **caractérisé en ce que** les unités d'entraînement (08) du groupe (18) sont susceptibles d'être associées à différents axes directeurs (a ; b).

18. Dispositif d'entraînement selon la revendication 1 ou 4, **caractérisé en ce que** la ligne de signalisation (09) guide des signaux de la position d'axe directeur (Φ; Φa; Φb) de plusieurs axes directeurs (a ; b) virtuels.

19. Dispositif d'entraînement selon les revendications 16 et 18, **caractérisé en ce que** les unités d'entraînement (08) des sous-groupes (18), au moyen de la commande (17) hiérarchiquement inférieure, mettent en référence des positions angulaires de consigne (Φᵢ') par rapport à des axes directeurs (a ; b) virtuels différents.

20. Dispositif d'entraînement selon la revendication 1 ou 4, **caractérisé en ce que** les valeurs d'offset (ΔΦᵢ) spécifiques sont placées en réserve dans la commande d'entraînement (13 ; 17).

21. Dispositif d'entraînement selon la revendication 1 ou 4, **caractérisé en ce que** les valeurs d'offset (ΔΦᵢ) spécifiques sont placées en réserve dans la commande d'entraînement (13 ; 17) hiérarchiquement inférieure.

22. Dispositif d'entraînement selon la revendication 20 ou 21, **caractérisé en ce que** des positions angulaires de consigne (Φᵢ) spécifiques, pour les différentes unités d'entraînement (08), sont formées dans la commande d'entraînement (13 ; 17), à partir de la position d'axe directeur (Φ; Φa; Φb) et de la valeur d'offset (ΔΦᵢ), et sont amenées aux unités d'entraînement (08) concernées.

23. Dispositif d'entraînement selon la revendication 1 ou 4 **caractérisé en ce que**, par l'intermédiaire de la ligne de signalisation (14), différente de la ligne de signalisation (09), les agrégats (01 ; 02 ; 03 ; 04 ; 06 ; 07) sont reliés, ensemble et à une unité de calcul et de traitement des données (11).

24. Dispositif d'entraînement selon la revendication 23, **caractérisé en ce que** les valeurs d'offset (ΔΦᵢ) sont amenées aux commandes d'entraînement (17) hiérarchiquement inférieure, par l'intermédiaire de cette ligne de signalisation (14).

25. Dispositif d'entraînement selon la revendication 23, **caractérisé en ce que**, par l'intermédiaire de cette ligne de signalisation (14), une communication est effectuée, entre l'unité de calcul et de traitement des données (11) et les agrégats (01 ; 02 ; 03 ; 04 ; 06 ; 07), au moins eu égard à des affectations de valeur de consigne et à une transmission de valeur réelle pour les organes de réglage et/ou unités d'entraînement, différents des unités d'entraînement (08), des agrégats (01 ; 02 ; 03 ; 04 ; 06 ; 07).

26. Dispositif d'entraînement selon la revendication 1 ou 4, **caractérisé en ce qu'**est prévue une unité de manoeuvre, dans laquelle peuvent être introduites les valeurs d'offset (ΔΦᵢ).

27. Dispositif d'entraînement selon la revendication 1 ou 4, **caractérisé en ce qu'**est prévue une unité de mémoire, dans laquelle les valeurs d'offset (ΔΦᵢ), pour les différentes unités d'entraînement pour une production spécifique, sont susceptibles d'être stockées et d'être lues de celle-ci en cas de besoin.

28. Procédé d'entraînement d'une machine de traitement, plusieurs agrégats (01 ; 02 ; 03 ; 04 ; 06 ; 07) étant entraînés mécaniquement indépendamment les uns des autres par des unités d'entraînement (08), **caractérisé en ce que**, dans une première ligne de signalisation (09), sont guidés uniquement des signaux d'une position d'axe de consigne (Φ), non encore adaptée à la position angulaire de consigne des différents entraînements (08), d'un axe directeur virtuel (a ; b), et **en ce que**, dans une deuxième ligne de signalisation (16 ; 16' ; 14 ; 25 ; 27), aux unités d'entraînement (08) ou à une commande d'entraînement (17) hiérarchiquement inférieure de ces agrégats (01 ; 02 ; 03 ; 04 ; 06 ; 07) est chaque fois amené un offset (ΔΦᵢ) spécifique, qui fixe un décalage entre une position angulaire de consigne (Φᵢ) et la position d'axe directeur (Φ; Φa; Φb).

29. Procédé selon la revendication 28, **caractérisé en ce qu'**une édition, de la position d'axe directeur (Φ) concernant les agrégats (01 ; 02 ; 03 ; 04 ; 06 ; 07) ayant participé à une production, s'effectue par une commande d'entraînement (13) hiérarchiquement supérieure et **en ce qu'**une préparation des positions angulaires de consigne spécifiques, pour les différentes unités d'entraînement (08) des agrégats (01 ; 02 ; 03 ; 04 ; 06 ; 07), s'effectue ensuite dans la commande d'entraînement (17) hiérarchiquement inférieure qui transmet les positions angulaires de consigne spécifiques, en tant qu'affectation au dispositif de régulation (08) de l'agrégat (01 ; 02 ; 03 ; 04 ; 06 ; 07) individuel.

30. Procédé selon la revendication 28, **caractérisé en ce que** les valeurs d'offset (ΔΦᵢ) spécifiques sont placées en réserve dans une commande d'entraînement (13 ; 17) hiérarchiquement inférieure, associée conjointement à plusieurs unités d'entraînement (08) installées en aval.

31. Procédé selon la revendication 28 **caractérisé en ce que** des positions angulaires de consigne (Φᵢ') spécifique pour les différentes unités d'entraînement (08) sont formées dans la commande d'entraînement (13 ; 17), à partir de la position d'axe directeur (Φ; Φa; Φb) et à partir des valeurs d'offset (ΔΦᵢ) spécifiques, et sont amenées aux unités d'entraînement (08) concernées.

32. Procédé selon la revendication 28 **caractérisé en ce que** les valeurs d'offset (ΔΦᵢ) spécifiques sont placées en réserve dans les différentes unités d'entraînement (08) et **en ce que**, à cet endroit, sont formées des valeurs angulaires de consigne (Φᵢ') spécifiques, à partir de la position d'axe directeur (Φ; Φa; Φb) et de la valeur d'offset (ΔΦᵢ) spécifique.

33. Procédé selon la revendication 28, **caractérisé en ce que** les valeurs d'offset (ΔΦᵢ) sont introduites dans une unité de manoeuvre.

34. Procédé selon la revendication 28, **caractérisé en ce que** les valeurs d'offset (ΔΦᵢ), pour les différentes unités d'entraînement (08) pour une production spécifique, sont mémorisées dans une unité de mémoire et, en cas de besoin, sont lues à partir de celle-ci.
